# EUROPÄISCHE PATENTSCHRIFT

(11) **EP 0 381 796 B1**
(45) Veröffentlichungstag und Bekanntmachung des Hinweises auf die Patenterteilung: **09.08.1995**
(21) Anmeldenummer: 89102331.9
(22) Anmeldetag: 10.02.1989
(51) Int. Cl.: B06B 1/06, G01H 3/00

(54) **Ultraschall-Sensor**
Ultrasonic sensor
Capteur ultrasonore

(43) Veröffentlichungstag der Anmeldung: 16.08.1990
(73) Patentinhaber: SIEMENS AKTIENGESELLSCHAFT, 80333 München (DE)
(72) Erfinder: Granz, Bernd, Dipl.-Phys. Dr., D-90552 Oberasbach (DE); Köhler, Georg, Dipl.-Ing., D-96129 Geisfeld (DE)

(56) Entgegenhaltungen:
- EP-A- 0 015 159
- EP-A- 0 227 985
- EP-A- 0 256 202
- US-A- 4 475 376

## Beschreibung

Die Erfindung bezieht sich auf einen Ultraschall-Sensor gemäß dem Oberbegriff des Hauptanspruches.

Bei der Bestimmung der Eigenschaften eines in einem schalltragenden Medium, beispielsweise Wasser, herrschenden Ultraschallfeldes werden sogenannte Membran- oder Miniatur-Hydrophone verwendet. Die dreidimensionale Verteilung der Schalldruckamplitude des Ultraschallfeldes wird dadurch ermittelt, daß an jeweils verschiedenen Orten in einer Meßwanne herrschende Schalldruck mit einem derartigen Hydrophon gemessen wird. Diese Hydrophone sollen dabei das zu messende Schallfeld möglichst wenig beeinflussen.

In "Ultrasonics, Mai 1980, Seiten 123 bis 126" ist beispielsweise ein Membran-Hydrophon offenbart, bei dem eine Folie aus Polyvinylidenfluorid PVDF mit einer Dicke von 25 »m zwischen zwei als Stützkörper dienende Metallringe aufgespannt ist. Dadurch wird eine Membran mit einem Innendurchmesser von etwa 100 nm gebildet. Die Oberflächen der Membran sind in einem kleinen zentralen Bereich mit einander gegenüberliegenden kreisscheibenförmigen Elektroden versehen, deren Durchmesser beispielsweise 4 mm beträgt. Zwischen diesen Elektroden befindet sich der polarisierte, piezoelektrisch aktive Bereich der Membran. Von den kreisscheibenförmigen Elektroden führen als Metallfilme auf die Oberfläche der Membran aufgebrachte Anschlußleiter zum Rand der Membran und werden dort mit Hilfe eines Leitklebers mit einem Koaxialkabel kontaktiert.

Bei diesem bekannten Hydrophon können sich jedoch bei der Messung von Ultraschall-Stoßwellen, insbesondere bei häufigem Einsatz Probleme einstellen. Derartige Stoßwellen mit sehr steilen Pulsflanken, deren Anstiegszeiten 1 »sec unterschreiten und deren Druckamplituden im Bereich von 10⁸ Pa liegen, führen im Laufe der Zeit zu einer durch Kavitationseffekte verursachten mechanischen Zerstörung der auf die PVDF-Schicht aufgebrachten metallischen Elektroden. Solche Stoßwellen treten beispielsweise im Fokusbereich von Lithotriptern auf, bei denen eine fokussierte Ultraschall-Stoßwelle zur Zerstörung von Konkrementen, beispielsweise Nierensteine in der Niere eines Patienten, verwendet wird. Sowohl bei der Entwicklung als auch bei der routinemäßigen Überwachung derartiger Geräte ist es erforderlich, die Eigenschaften der Stoßwelle im Fokusbereich zu bestimmen.

Ein zur Messung solcher Stoßwellen besonders geeigneter Ultraschall-Sensor ist aus der EP-A-0 227 985 bekannt, bei dem eine in ihrem Randbereich an einem Stützkörper befestigte Polymerfolie in einem Teilbereich piezoelektrisch aktiviert und mit Elektroden elektrisch gekoppelt ist, die räumlich getrennt vom piezoelektrisch aktiven Bereich anzuordnen sind. Die im piezoelektrisch aktiven Bereich der Polymerfolie durch eine Ultraschallwelle verursachten Oberflächenladungsschwingungen werden über das die Polymerfolie umgebende schalltragende Medium zu den außerhalb des dem piezoelektrisch aktiven Bereich der Polymerfolie zugeordneten Oberflächenbereiches der Polymerfolie angeordneten Elektroden elektrisch gekoppelt. Der piezoelektrisch aktive zentrale Bereich der Polymerfolie kann somit im Fokusbereich einer fokussierten Ultraschall-Stoßwelle angeordnet sein, da im zentralen Bereich der Polymerfolie keine mechanisch instabile elektrisch leitfähige Schicht vorhanden ist.

Durch die Verwendung eines piezoelektrischen Polymers mit einer gegenüber piezokeramischen Werkstoffen relativ geringen Dielektrizitätskonstante ist eine rein kapazitive Kopplung ohne hohe Signalverluste möglich. Die Elektroden können dementsprechend vom piezoelektrisch aktiven Bereich der Polymerfolie räumlich getrennt sowohl auf der Folie selbst als auch außerhalb der Folie, beispielsweise am Stützkörper der Folie angeordnet sein.

Bei Lithotriptoren, die in einem Wasserbecken angeordnet sind, in dem sich zur Behandlung auch der Patient befindet, ist eine Kontrolle des Fokus mit den Ultraschall-Sensoren problemlos möglich. Diese müssen für Kontrollzwecke lediglich in das vorhandene Wasserbecken eingesetzt werden. Neuere Lithotriptoren enthalten jedoch einen frei beweglichen Stoßwellensender, der in der Regel über eine sackartige, von einer Gummimembran umschlossene, wassergefüllte Vorlaufstrecke an den Körper eines Patienten angekoppelt wird (EP-A-0 133 665). Ein Wasser becken, in dem der Patient Platz nehmen muß und in das zu Kontrollzwecken ein Ultraschall-Sensor eingebracht werden kann, ist somit nicht mehr vorhanden.

Für die praktische Durchführung von Routinemessungen im Fokusbereich eines derartigen Lithotriptors ist es jedoch wünschenswert, daß sie ohne größere Vorbereitungen und mit geringem Aufwand möglich sind. Dies ist mit den bekannten Ultraschall-Sensoren nicht möglich. Zur Messung mit den bekannten Ultraschall-Sensoren muß in der Regel der Stoßwellensender abgenommen werden und an einem separaten Meßplatz in einer eigens dafür vorbereiteten Meßwanne kontrolliert werden.

EP-A-0 256 202 offenbart einen aus einem elastischen, formstabilen Material (z.B. einem Hydrogel) bestehenden Ankoppelkörper, des an eine Stoßwellenquelle angekoppelt ist, um mittels eines Sensors die Funktion des Quelle zu überwachen.

Der Erfindung liegt nun die Aufgabe zugrunde, einen Ultraschall-Sensor anzugeben, der für Routinemessungen im Fokusbereich eines Lithotriptors besonders geeignet ist.

Die genannte Aufgabe wird erfindungsgemäß gelöst mit den Merkmalen des Hauptanspruchs. Zur Kontrolle des Fokus kann der Ultraschall-Sensor in die von einer Gummimembran abgeschlossene Vorlaufstrecke des Lithotriptors eingedrückt werden. Durch die konvex gewölbte kuppelformige Gestalt des Gehäuses ist gewährleistet, daß zwischen der Gummimembran und dem Gehäuse keine luftgefüllten Hohlräume entstehen, die eine fehlerhafte Messung verursachen können.

In einer besonders bevorzugten Ausgestaltung der Erfindung ist ein Ultraschall-Sensor vorgesehen, bei dem die Signalelektroden räumlich getrennt vom piezoelektrisch aktivierten Bereich angeordnet sind. Da auf die Oberfläche der Polymerfolie in ihrem piezoelektrisch aktivierten Bereich keine dünnen Elektroden aufgebracht sind, ist die Haltbarkeit des Ultraschall-Sensors und die Reproduzierbarkeit der mit ihm durchgeführten Messungen verbessert.

In einer vorteilhaften Ausgestaltung der Erfindung ist eine sphärische Oberfläche vorgesehen, deren Krümmungsmittelpunkt wenigstens annähernd mit dem piezoelektrisch aktivierten Bereich zusammenfällt. Dadurch ist der Ultraschall-Sensor in zwei Winkelkoordinaten frei justierbar und seine Winkelakzeptanz hängt nur noch von der Größe des piezoelektrisch aktivierten Bereiches ab.

Das Gehäuse besteht im Bereich der konvex gewölbten, kuppelförmigen Oberfläche vorzugsweise aus Kunststoff, um störende Reflexionen an der Gehäuseoberfläche weitgehend zu vermeiden.

Zur weiteren Erläuterung der Erfindung wird auf die Zeichnung verwiesen, in deren
- Figur 1: eine bevorzugte Ausführungsform eines Ultraschall-Sensors gemäß der Erfindung in einem Schnitt schematisch veranschaulicht ist.
- Figuren 2 und 3: zeigen einen Ausschnitt eines Ultraschall-Sensors mit einer besonders vorteilhaften Elektrodenanordnung ebenfalls im Schnitt.

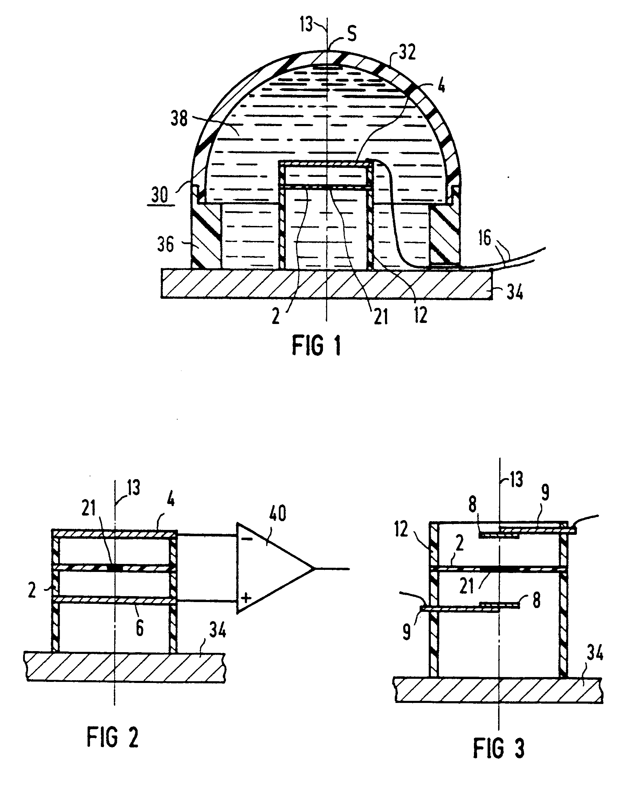

Gemäß Figur 1 ist eine Polymerfolie 2 freitragend in einer

Haltevorrichtung 12 befestigt. Die Haltevorrichtung 12 hat die Gestalt eines Hohlzylinders und ist mit einer ihrer Stirnflächen auf einer Grundplatte 34 angeordnet. In der Haltevorrichtung 12 ist die Polymerfolie 2 mit ihren Flachseiten senkrecht zur Mittelachse 13 des Hohlzylinders eingespannt. Die Grundplatte 34 ist Teil eines Gehäuses 30, das in einem der Grundplatte 34 gegenüberliegendem Bereich eine konvex gewölbte, kuppelförmige Oberfläche 32 hat. In einer bevorzugten Ausführungsform ist diese Oberfläche 32 sphärisch und die Mittelachse 13 der hohlzylindrischen Haltevorrichtung 12 schneidet diese Oberfläche 32 in ihrem Scheitelpunkt S. Das konvex gewölbte Gehäuseteil sitzt auf einem mit der Grundplatte verbundenen ebenfalls hohlzylindrischen Rahmen 36 und besteht vorzugsweise aus einem Kunststoff mit möglichst geringer akustischer Impedanz, insbesondere Polymethylpenthen PMP oder Polystyrol PS. Der Rahmen 36 und die Haltevorrichtung 12 bestehen in einer bevorzugten Ausführungsform ebenfalls aus einem Kunststoff.

Die Polymerfolie 2 ist zwischen 10 »m und 100 »m dick und hat einen freien Durchmesser von etwa 10 - 20 mm. Sie ist in einem zentralen Bereich 21, der etwa einen Durchmesser von 1 - 2 mm hat, piezoelektrisch aktiviert. Die zylindrische Haltevorrichtung 12 hat beispielsweise eine Wandstärke von 0,5 mm und ist an ihrer der Grundplatte 34 abgewandten Stirnfläche mit einer Elektrode 4 versehen, die als Signalelektrode dient und die Haltevorrichtung 12 deckelartig abschließt. Die Elektrode 4 ist somit parallel zur Polymerfolie 2 angeordnet. Der Abstand zwischen Elektrode 4 und Polymerfolie 2 beträgt vorzugsweise etwa 3 mm Als Elektrode 4 ist beispielsweise eine dünne, beispielsweise 20 »m dicke Metallfolie, vorzugsweise ein Metallgitter aus Edelstahl vorgesehen.

Der gesamte Innenraum des Gehäuses 30 ist mit einer schalltragenden Flüssigkeit 38 mit hoher Dielektrizitätskonstante, beispielsweise hochreines Wasser mit einer Leitfähigkeit kleiner als 10 »s/cm, oder Silikonöl, vorzugsweise Glyzerin, gefüllt. Die Elektrode 4 und die metallische Grundplatte 34 bilden die beiden Elektroden zur kapazitiven Aufnahme des im piezoelektrisch aktivierten Bereich 21 der Polymerfolie 2 erzeugten Ladungssignals, das als Signalspannung an den elektrischen Zuführungen 16 abgegriffen werden kann.

In einer besonders bevorzugten Ausgestaltung gemäß Figur 2 ist eine Signalelektrode 6 vorgesehen, die in der zylindrischen Haltevorrichtung 12 zwischen der Polymerfolie 2 und der Grundplatte 34 angeordnet ist. Die an der Stirnfläche der zylindrischen Haltevorrichtung 12 angeordnete Elektrode 4 ist in dieser Ausführungsform als Gegenelektrode vorgesehen. Die Grundplatte 34 kann aus Metall oder aus Kunststoff bestehen. Die Elektroden sind vorzugsweise symmetrisch zur Polymerfolie 2 angeordnet. Dadurch kann das Signal mit einem Differenzverstärker 40, dessen Eingänge jeweils mit einer Elektrode 4 bzw. 6 verbunden sind, ausgelesen werden. Elektrische Störungen, die auf beiden Elektroden 4 und 6 gleichermaßen auftreten, werden dadurch unterdrückt.

Zur kapazitiven Aufnahme des Ladungssignals sind gemäß Figur 3 auch Elektroden 8 geeignet, die sich nicht über die gesamte freie Querschnittsfläche der Haltevorrichtung 12 erstrecken und die Polymerfolie 2 nicht in ihrem gesamten Bereich abdecken. Diese Elektroden sind gemäß dem Beispiel der Figur auf einem stiftartigen Träger 9 angeordnet, der in die Haltevorrichtung 12 eingeklebt ist. Bei einer um 180° versetzten Anordnung der Träger 9 werden bei dieser Ausführungsform insbesondere parasitäre Kapazitäten verringert.

Anstelle von senkrecht zur Mittelachse 13 angeordneten Elektroden 4 und 6, können in einer weiteren Ausführungsform auch ringförmige Elektroden vorgesehen sein, die an der Innenwand der zylindrischen Haltevorrichtung 12 angeordnet sind. Dies hat den Vorteil, daß sich im Schallstrahl keine störenden Grenzflächen befinden.

## Patentansprüche

1. Ultraschall-Sensor mit folgenden Merkmalen:
a) es ist eine Polymerfolie (2) vorgesehen, die
a1) freitragend in einer Haltevorrichtung (12) befestigt ist und
a2) wenigstens in einem Bereich (21) piezoelektrisch aktiviert und mit Elektroden (4, 34) gekoppelt ist;
b) die Polymerfolie (2) ist in einem schalltragenden Medium angeordnet;
c) das schalltragende Medium hat wenigstens in einem einer der Flachseiten der Polymerfolie (2) gegenüberliegenden Bereich eine konvex geformte Randfläche,
**gekennzeichnet** durch folgende weitere Merkmale:
d) als schalltragendes Medium ist eine Flüssigkeit vorgesehen;
e) es ist ein mit der schalltragenden Flüssigkeit gefülltes Gehäuse (30) vorgesehen;
f) die konvex geformte Randfläche der Flüssigkeit ist mit einer konvex gewölbten, kuppelförmigen Oberfläche (32) des Gehäuses (30) gebildet;
g) das Gehäuse (30) besteht wenigstens im Bereich der konvex gewölbten, kuppelförmigen Oberfläche (32) aus einem Kunststoff mit einer geringen akustischen Impedanz.

2. Ultraschall-Sensor nach Anspruch 1, **dadurch gekennzeichnet,** daß die Elektroden (4, 34) räumlich getrennt vom piezoelektrischen Bereich angeordnet sind.

3. Ultraschall-Sensor nach Anspruch 1 oder Anspruch 2, **dadurch gekennzeichnet,** daß eine sphärische Oberfläche (32) vorgesehen ist, deren Krümmungs-Mittelpunkt (M) wenigstens annähernd mit dem piezoelektrisch aktivierten Bereich (21) zusammenfällt.

4. Ultraschall-Sensor nach einem der vorhergehenden Ansprüche, **dadurch gekennzeichnet,** daß als Kunststoff Polymethylpenthen (PMP) oder Polystyrol (PS) vorgesehen ist.

5. Ultraschall-Sensor nach einem der vorhergehenden Ansprüche, **dadurch gekennzeichnet,** daß die Haltevorrichtung (12) einen innerhalb des Gehäuses (30) angeordneten Hohlzylinder bildet, dessen Mittelachse (13) durch den Scheitelpunkt (S) der konvex gewölbten Oberfläche verläuft und die Flachseiten der Polymerfolie (2) senkrecht schneidet.

6. Ultraschall-Sensor nach einem der vorhergehenden Ansprüche, **dadurch gekennzeichnet,** daß die Elektroden (4 und 6) symmetrisch zur Polymerfolie (2) angeordnet sind.

7. Ultraschall-Sensor nach Anspruch 6, **dadurch gekennzeichnet,** daß die Elektroden (4 und 6) jeweils mit einem Eingang eines Differenzverstärkers (40) verbunden sind.

## Claims

1. Ultrasonic sensor having the following features:
a) a polymer film (2) is provided,
a1) which is fastened in a self-supporting manner in a holding device (12) and
a2) which is activated piezoelectrically at least in one region (21) and is coupled to electrodes (4, 34);
b) the polymer film (2) is arranged in a sound-carrying medium;
c) the sound-carrying medium has at least in one region lying opposite one of the flat sides of the polymer film (2) a convexly formed lateral face,
characterized by the following further features:
d) a liquid is provided as sound-carrying medium;
e) a housing (30) filled with the sound-carrying liquid is provided;
f) the convexly formed lateral face of the liquid is formed with a convexly arched, dome-shaped surface (32) of the housing (30);
g) the housing (30) consists at least in the region of the convexly arched, dome-shaped surface (32) of a plastic with a small acoustic impedance.

2. Ultrasonic sensor according to claim 1, characterized in that the electrodes (4, 34) are arranged so that they are spatially separate from the piezoelectric region.

3. Ultrasonic sensor according to claim 1 or claim 2, characterized in that a spherical surface (32) is provided, the curvature centre point (M) of which coincides at least approximately with the piezoelectrically activated region (21).

4. Ultrasonic sensor according to one of the preceding claims, characterized in that polymethylpentene (PMP) or polystyrene (PS) are provided as plastics.

5. Ultrasonic sensor according to one of the preceding claims, characterized in that the holding device (12) forms a hollow cylinder arranged inside the housing (30), the centre axis (13) of which cylinder extends through the summit (S) of the convexly arched surface and intersects the flat sides of the polymer film (2) vertically.

6. Ultrasonic sensor according to one of the preceding claims, characterized in that the electrodes (4 and 6) are arranged symmetrically to the polymer film (2).

7. Ultrasonic sensor according to claim 6, characterized in that the electrodes (4 and 6) are in each case connected to an input of a difference amplifier (40).

## Revendications

1. Capteur à ultrasons présentant les caractéristiques suivants :
a) il est prévu une feuille de polymère (2), qui
a1) est fixée à la console dans un dispositif de retenue (12), et
a2) est activée par voie piézoélectrique au moins dans une zone (21) et est accouplée à des électrodes (4,34);
b) la feuille de polymère (2) est disposée dans un milieu transmettant le son;
c) le milieu transmettant le son possède une surface marginale de forme convexe, au moins dans une zone située en vis-à-vis des faces planes de la feuille de polymère (2),
caractérisé par les autres caractéristiques suivantes :
d) un liquide est prévu en tant que milieu transmettant le son;
e) il est prévu un boîtier (30) rempli par le liquide transmettant le son;
f) la surface marginale de forme convexe du liquide est formée par une surface en forme de coupole cintrée convexe (32) du boîtier (30);
g) le boîtier (30) est constitué, au moins dans la zone de la surface en forme de coupole cintrée convexe (32), par une matière plastique possédant une impédance acoustique faible.

2. Capteur à ultrasons suivant la revendication 1, caractérisé par le fait que les électrodes (4,34) sont disposées en étant séparées spatialement de la zone piézoélectrique.

3. Capteur à ultrasons suivant la revendication 1 ou 2, caractérisé par le fait qu'il est prévu une surface sphérique (32), dont le centre de courbure (M) coïncide au moins approximativement avec la zone (21) activée du point de vue piézoélectrique.

4. Capteur à ultrasons suivant l'une des revendications précédentes, caractérisé par le fait qu'on prévoit, comme matière plastique, du polyméthylpentène (PMP) ou du polystyrène (PS).

5. Capteur à, ultrasons suivant l'une des revendications précédentes, caractérisé par le fait que le dispositif de retenue (12) forme un cylindre creux disposé à l'intérieur du boîtier (30) et dont l'axe médian (13) passe par le sommet (S) de la surface cintrée convexe et recoupe à angle droit la face plane de la feuille de polymère (2).

6. Capteur à ultrasons suivant l'une des revendications précédentes, caractérisé par le fait que les électrodes (4 et 6) sont disposées symétriquement par rapport à la feuille de polymère (2).

7. Capteur à ultrasons suivant la revendication 6, caractérisé par le fait que les électrodes (4 et 6) sont reliées respectivement à une entrée d'un amplificateur différentiel (40).
